Europäisches Patentamt
European Patent Office
Office européen des brevets

(19)

(11) Numéro de publication: **0 342 073 A1**

(12) **DEMANDE DE BREVET EUROPEEN**

(21) Numéro de dépôt: 89401079.2

(22) Date de dépôt: 19.04.89

(51) Int. Cl.[4]: **C 08 G 75/00**
C 07 C 155/10

(30) Priorité: 19.04.88 FR 8805179

(43) Date de publication de la demande:
15.11.89 Bulletin 89/46

(84) Etats contractants désignés:
AT BE CH DE ES FR GB GR IT LI LU NL SE

(71) Demandeur: Société Anonyme dite: NORSOLOR
Tour Aurore, Place des Reflets
F-92080 Paris la Défense 2, Cedex 5 (FR)

(72) Inventeur: Clouet, Gilbert
6, rue des Jardins
F-67610 La Wantzenau (FR)

Nair, Reghunadhan C.P. Polymers and Special Chemicals Division Vikram Sarabhai Space Center
Trivandrum 695022 (IN)

(74) Mandataire: Chaillot, Geneviève
Cabinet CHAILLOT 21, avenue Louise de Bettignies
F-92700 Colombes (FR)

(54) **Poly(thiurame disulfures), leur préparation et leur utilisation dans la polymérisation de monomères vinyliques.**

(57) Ces composés sont représentés par la formule (I) :

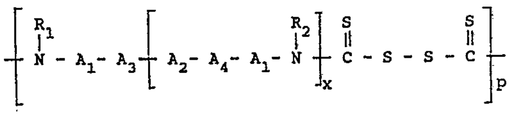

(I)

avec notamment $R_1$, $R_2$ = alkyle en $C_1$-$C_{12}$, cycloalkyle, aryle, Y-$R_4$ (Y = simple liaison, hétéroatome, alkyle en $C_1$-$C_{12}$; et $R_4$ = groupement phosphoré, hydroxyle, carboxyle, ester, -Si($R_6$)$_2$H ($R_6$ = alkyle, cycloalkyle, etc.)); $A_1$ = -($CR_8R_9$)$_n$-($R_8$, $R_9$ = H ou alkyle; n = 1 à 6 ), ou -$NR_1$-$A_1$-$NR_2$- forme un hétérocyle azoté;

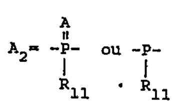

($R_{11}$ = alkyle, cycloalkyle, etc,; A = O ou S); $A_3$ et $A_4$ sont tous deux égaux à -O- ($x \geqq 1$ dans ces cas) ou représentent respectivement
- $NR_2$ et - $NR_1$ ;

$0 \leqq \bar{x} \leqq 100$; $2 \leqq \bar{p} \leqq 100$.

Ces composés sont des agents ayant la triple fonction d'initiateur, d'agent de transfert de chaîne et d'agent de terminaison dans la polymérisation radicalaire de monomères vinyliques. De plus, ces composés et les polymères vinyliques multifonctionnels obtenus par polymérisation radicalaire d'au moins un monomère vinylique en leur présence sont utilisés à titre d'additifs ou de composants d'ignifugation.

EP 0 342 073 A1

## Description

# POLY(THIURAME DISULFURES), LEUR PREPARATION ET LEUR UTILISATION DANS LA POLYMERISATION DE MONOMERES VINYLIQUES.

La présente invention porte sur de nouveaux polymères qui sont des poly(thiurame disulfures), sur des procédés permettant de les fabriquer, et sur leur utilisation dans la polymérisation radicalaire de monomères vinyliques. L'invention porte également sur ces polymères vinyliques, qui sont utiles en tant que tels ou pour fabriquer des polymères séquencés. Dans le cas où les poly(thiurame disulfures) portent des groupements phosphorés, les polymères correspondants sont utiles pour constituer ou pour entrer dans la constitution de matériaux ignifugés.

Les polymères vinyliques fonctionnels, recherchés parce qu'ils peuvent entrer dans la composition de polymères à propriétés spécifiques, par exemple à propriétés d'ignifugation dans le cas précité, étaient jusqu'ici généralement préparés par la voie anionique, mettant en jeu la réaction d'anions actifs avec des électrophiles appropriés. Toutefois, ce type de polymérisation est difficile à mettre en oeuvre à l'échelle industrielle. C'est pourquoi, depuis ces dernières années, on a proposé des techniques de polymérisation radicalaire, employant des agents producteurs de radicaux libres, monofonctionnels et, dans certains cas, difonctionnels, comme les systèmes azoïques et les systèmes Redox. Cependant, dans ces systèmes, les fonctions sont limitées aux fonctions hydroxyle et carboxyle.

Recherchant une technique permettant d'envisager toutes les possibilités de fonctionnalisation, la Société déposante a découvert des poly(thiurame disulfures) qui permettent d'atteindre l'objectif recherché. Les disulfures non fonctionnels de tétraalkylthiurame ont déjà été décrits par Takayuki Otsu et al dans ≪Makromol. Chem. Rapid., Commun. 3, 127-132 (1982), à titre d,agents ayant la triple fonction d'initiateur, d'agent de tranfert de chaîne et d'agent de terminaison, dans la polymérisation radicalaire de monomères vinyliques, de tels agents étant désignés dans cet article par l'abréviation ≪iniferter≫. Par analogie, les poly(thiurame disulfures) de l'invention, qui possèdent cette même triple fonction, sont désignés par l'abréviation ≪polyiniferter≫.

La présente invention a donc d'abord pour objet un composé chimique représenté par la formule (I)

$$\left[ \overset{R_1}{\overset{|}{N}} - A_1 - A_3 \left[ A_2 - A_4 - A_1 - \overset{R_2}{\overset{|}{N}} \right]_x \overset{S}{\overset{\|}{C}} - S - S - \overset{S}{\overset{\|}{C}} \right]_p \qquad (I)$$

dans laquelle :

- $R_1$ et $R_2$ représentent chacun, indépendamment l'un de l'autre :

. un groupe alkyle en $C_1$-$C_{12}$, linéaire ou ramifié, éventuellement interrompu par au moins un hétéroatome tel que O et/ou par au moins un reste

$$\underset{R_3}{\underset{|}{-N-}} ,$$

. un groupe cycloalkyle en $C_3$-$C_{12}$ ;

. un groupe aryle ;

. un groupe Y-$R_4$, dans lequel :

- Y représente une simple liaison; un hétérotome tel que O; un groupe alkyle en $C_1$-$C_{12}$ linéaire ou ramifié, éventuellement interrompu par un hétéroatome tel que O et/ou par au moins un reste

$$\underset{R_5}{\underset{|}{-N-}} ;$$

groupe cycloalkyle en $C_3$-$C_{12}$; un groupe aryle ; et

- $R_4$ représente un groupement phosphoré, hydroxyle, carboxyle, ester, -Si$(R_6)_2$H;

- $R_3$ et $R_5$ étant choisis indépendamment l'un de l'autre parmi les groupes entrant dans la définition de $R_1$ et $R_2$ à l'exclusion du groupe Y-$R_4$;

- chacun des groupes $R_1$, $R_2$, $R_3$ et $R_5$ pouvant porter au moins un groupement fonctionnel choisi parmi les groupements hydroxyle, carboxyle, ester, -Si$(R_7)_2$H, et les groupements phosphorés ;

- $R_6$ et $R_7$ représentant chacun, indépendamment l'un de l'autre, un groupe alkyle, cycloalkyle, alkoxy, aryle, aryloxy ;

- à la condition que, lorsque x est différent de 0, au moins l,un parmi les radicaux $R_1$ et $R_2$ soit constitué par ou

soit porteur d,au moins un groupement fonctionnel tel que défini ci-dessus, ce groupement fonctionnel pouvant être porté par un radical $R_3$ ou $R_5$;
- les groupes $R_1$ à $R_3$ et $R_5$ à $R_7$ pouvant porter des substituants;
- $A_1$ représente :
. un reste $-(CR_8R_9)_n-$, avec $R_8$ et $R_9$ représentant chacun, indépendamment l'un de l'autre, hydrogène ou un reste alkyle en $C_1$-$C_{12}$, ledit reste alkyle pouvant être interrompu par au moins un hétéroatome et/ou au moins un reste

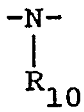 , $R_{10}$

étant choisi parmi les groupes entrant dans la définition de $R_1$ et $R2_2$; et n représentant un nombre entier de 1 à 6 ; ou bien
. le reste d'un cycle aliphatique pouvant renfermer au moins un hétéroatome ; ou
lorsque $A_3$ vaut

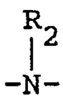

$R_1$ et $R_2$ du groupe

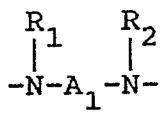

peuvent être réunis pour constituer un hétérocycle azoté;
- $A_2$ représente

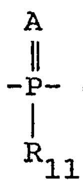 ou 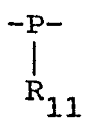 ,

avec $R_{11}$ représentant un groupe alkyle en $C_1$-$C_{12}$, alcoxy en $C_1$-$C_{12}$ ou cycloalkyle en $C_3$-$C_{12}$, ou aryle, ces groupes pouvant porter des substituants ; et A représentant un atome d'oxygène ou de soufre;
- $A_3$ et $A_4$ répondent aux conditions suivantes :
. ou bien tous les deux sont égaux à -O- ;
. ou bien $A_3$ et $A_4$ représentent respectivement les mêmes

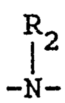 et 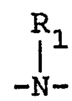

que ceux apparaissant dans l'écriture ci-dessus de la formule (I) ;
- $\bar{x}$ va de 0 à 100 environ, $\bar{x}$ étant cependant au minimum égal à 1 lorsque $A_3$ et $A_4$ représentent -O- ; et
- $\bar{p}$ va de 2 à 100 environ.

On peut mentionner, dans le cas où $R_1$ (ou $R_2$) porte au moins un groupement phosphoré, le cas où $R_1$ (ou $R_2$) représente le groupement comportant la fonction phosphinoyle ou thiophosphynoyle :

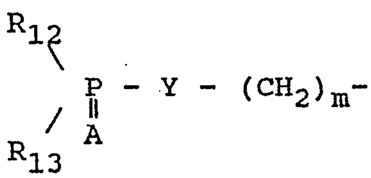

dans lequel :
- $R_{12}$ et $R_{13}$, identiques ou différents, représentent chacun un groupe alkyle, alcoxy, aryle, aryloxy,

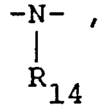

$R_{14}$ étant choisi parmi les groupes entrant dans la définition de $R_1$ et $R_2$, les groupes $R_{12}$, $R_{13}$ et $R_{14}$ pouvant être substitués chacun par au moins un atome d'halogène ;
- A représente un atome d'oxygène ou de soufre ;
- Y représente une simple liaison, ou -O-, ou encore

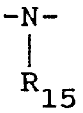

étant choisi parmi les groupes entrant dans la définition de $R_1$ et $R_2$ ; et
- m va de 0 à 12.

Ces polymères (I) sont terminés par des hydrogènes ou bien ils sont cyclisés sur eux-mêmes. Dans le premier cas, ils sont représentés par la formule :

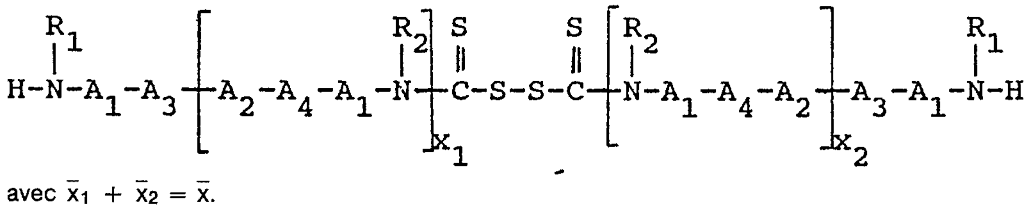

avec $\bar{x}_1 + \bar{x}_2 = \bar{x}$.

Une première famille de composés de formule (I) est représentée par la formule (Ia) :

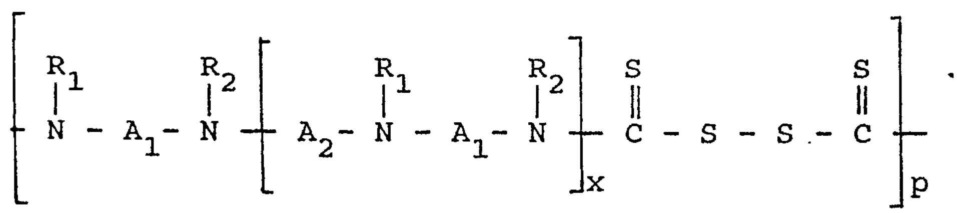

(Ia)

dans laquelle :
- $R_1$, $R_2$, $A_1$, $A_2$, $\bar{x}$ et $\bar{p}$ sont tels que définis ci-dessus. Parmi les composés (Ia), on peut mentionner plus particulièrement ceux pour lesquels :
- $R_1$ et $R_2$ représentent chacun, indépendamment l'un de l'autre, un groupe alkyle en $C_1$-$C_{12}$, linéaire ou ramifié, éventuellement interrompu par oxygène ou

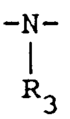

un groupe cycloalkyle en $C_5$-$C_7$ ; un groupe aryle, $R_3$ étant choisi parmi les groupes entrant dans la définition de $R_1$ et $R_2$ ; les groupes $R_1$ à $R_3$ pouvant être substitués par au moins un atome d'halogène ;
- $A_1$ représentent un reste $-(CH_2)_n-$, avec n valant de 1 à 6, ou un reste

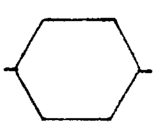, 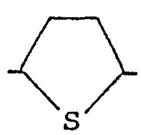, 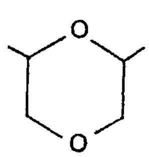 ou 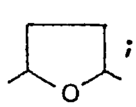 ; ou

ou
- le groupement

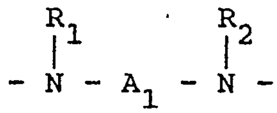 représente 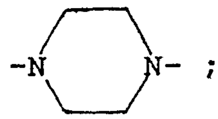 ;

- $A_2$ représente

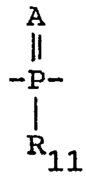 ,

$R_{11}$ et A étant tels que définis ci-dessus ; et

- $\overline{x}$ et $\overline{p}$ étant tels que définis ci-dessus.

Une seconde famille de composés de formule (I) est représentée par la formule (Ib) :

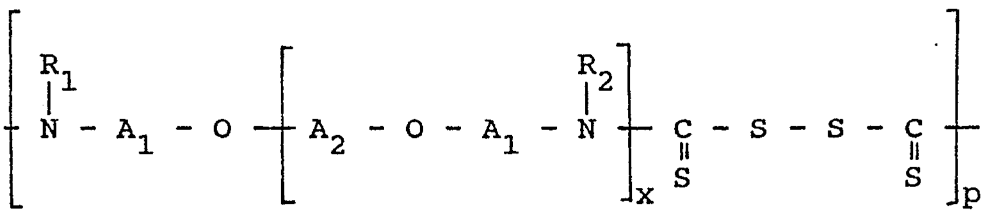 (Ib)

dans laquelle :

- $R_1$ et $R_2$ représentent chacun, indépendamment l'un de l'autre, un groupe alkyle en $C_1$-$C_{12}$, linéaire ou ramifié, éventuellement interrompu par oxygène ou

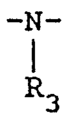

un groupe cycloalkyle en $C_5$-$C_7$ ; un groupe aryle ; $R_3$ étant choisi parmi les groupes entrant dans la définition de $R_1$ et $R_2$ ; les groupes $R_1$ à $R_3$ pouvant être substitués par au moins un atome d'halogène;

- $A_1$ représentent un reste $-(CH_2)_n-$ , avec n valant de 1 à 6, ou un reste

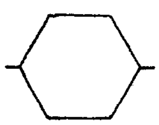, 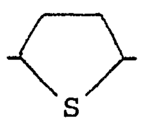, 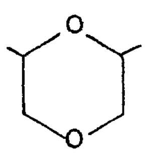 ou 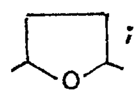 ;

et

- $A_2$ représente

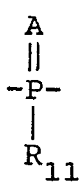 , $R_{11}$

et A étant tels que définis ci-dessus ; et

- $\overline{x}$ et $\overline{p}$ étant également tels que définis ci-dessus.]

Les composés de formule (I), pour lesquels x = 0 et

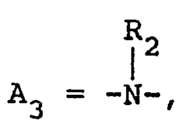

répondant ainsi à la formule (Ic) :

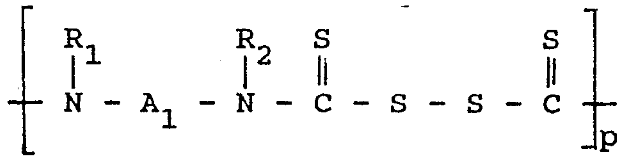 (Ic),

peuvent être préparés par réaction d'un composé de formule (II) :

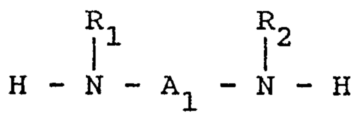 (II)

avec le disulfure de carbone, en présence d'un agent oxydant, qui est par exemple, l'iode, l'eau oxygénée, etc., et d'une amine tertiaire, par exemple, la triéthylamine.

Dans le cas où l'on utilise un rapport molaire du composé (II) à $CS_2$ de 2:1, en présence de deux moles d'amine tertiaire, on peut s'attendre à une valeur de $\overline{p}$ importante. Un léger excès de la diamine limite la valeur de $\overline{p}$.

La réaction est exothermique et on en contrôle l'exothermicité par tout moyen connu. Par ailleurs, elle est effectuée en milieu solvant, $CS_2$ pouvant, quant à lui, faire office de solvant.

Pour préparer les composés de formule (I), dans lesquels $\overline{x}$ est différent de 0,

- dans une première étape, on fait réagir un composé de formule (II), en excès,

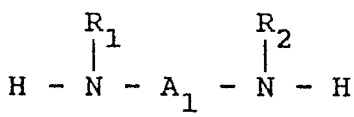 (II)

avec un composé de formule (III) :

$X - A_2 - X$ (III)

X étant un groupement partant, tel qu'un halogéne, ce qui conduit au composé intermédiaire de formule (IV) :

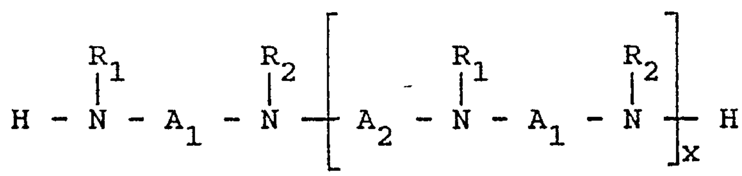 (IV)

et,

- dans une deuxième étape, on fait réagir le composé de formule (IV) avec $CS_2$, en présence d'un agent oxydant et d'une amine tertiaire.

La valeur de $\overline{x}$, à la première étape, est contrôlée par l'excès du composé (II) par rapport au composé (III).

La deuxième étape est une réaction analogue à celle décrite ci-dessus pour la préparation des composés (Id).

Les composés de formule (Ib) :

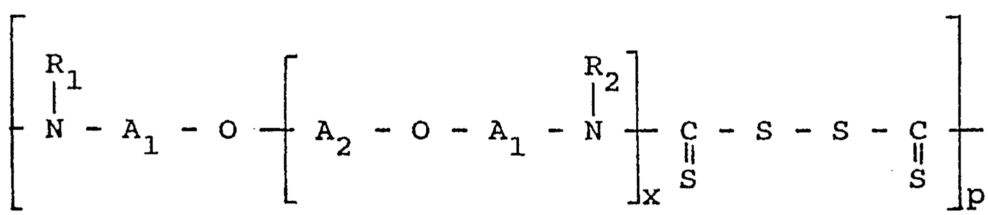 (Ib)

sont préparés par réaction d'un composé de formule (V) :

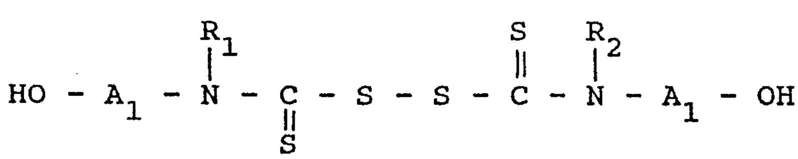 (V)

sur un composé de formule (III) :

$X - A_2 - X$ (III) X étant un groupement partant, tel qu'un halogène.

La présente invention a également pour objet l'utilisation du composé de formule (I), comme agent

polyiniferter dans la polymérisation radicalaire de monomères vinyliques, ledit agent polyiniferter étant introduit en début de polymérisation avec le mélange des monomères.

Comme monomères vinyliques, on peut citer les méthacrylates et acrylates d'alkyle, dont le groupe alkyle comporte, par exemple, de 1 à 8 atomes de carbone, les hydrocarbures vinylaromatiques, les nitriles insaturés, les acrylates d'alcoxy inférieurs, l'acrylate de cyanéthyle, l'acrylamide, les acrylates et méthacrylates d'hydroxyalkyle inférieurs, l'acide acrylique et l'acide méthacrylique, l'anhydride maléique et les maléimides substitués par des groupes alkyle ou aryle. En particulier, on peut mentionner le méthacrylate de méthyle, le méthacrylate d'éthyle, le méthacrylate d'isopropyle, le méthacrylate de n-butyle, le méthacrylate de sec.-butyle, le méthacrylate de tert.-butyle, le styrène, 1′ -méthylstyrène, le monochlorostyrène, le tertiobutylstyrène, le vinyltoluène, etc.

Le schéma réactionnel général supposé de cette polymérisation radicalaire est le suivant :

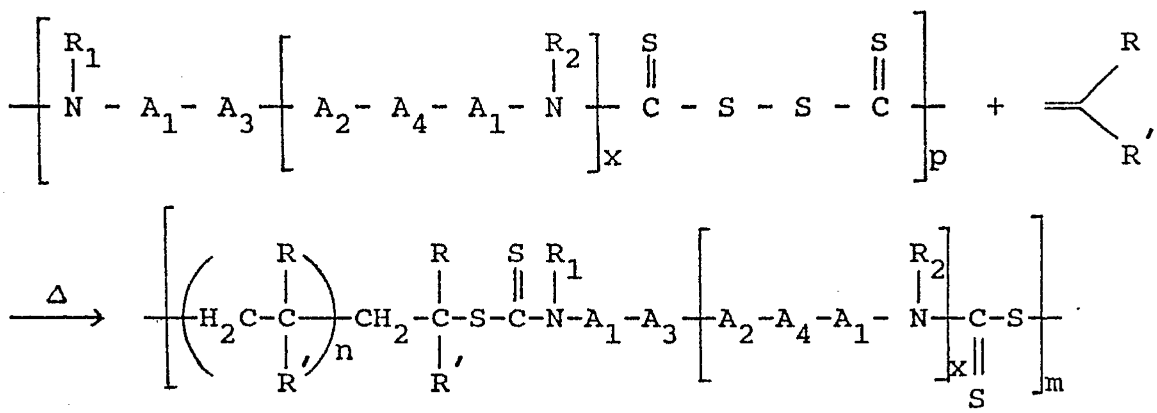


n étant le degré de polymérisation du monomère vinylique et m étant le nombre moyen de séquences par chaîne.

La séquence polymérique vinylique s'insère donc entre les deux soufres du groupe thiurame. Le poids moléculaire de chacune des séquences vinyliques dépend du rapport monomère vinylique/polyiniferter.

La quantité d'iniferter introduite est généralement comprise entre 20 g/l et 200 g/l par rapport au monomère vinylique. Lorsque l'iniferter est incorporé en trop grande quantité, la vitesse de polymérisation décroît, surtout dans le cas des acrylates, car il joue alors principalement le rôle d'un agent de terminaison des radicaux primaires.

L'invention porte également sur les polymères vinyliques multifonctionnels ainsi obtenus, qui sont constitués par des séquences dures, hydrophobes, c'est-à-dire les séquences vinyliques, en alternance avec des séquences molles, hydrophiles.

La présente invention porte également sur l'utilisation des composés de formule (I) et des polymères vinyliques multifonctionnels tels que définis ci-dessus, à la condition qu'ils portent au moins une fonction phosphate ou phosphonate, dans la fabrication de matières ignifugées, comme polymères ignifugeants, à titre d'additifs ou de composants d'ignifugation.

Pour mieux illustrer l'objet de la présente invention, on en décrira ci-aprés plusieurs exemples de réalisation, qui sont donnés à titre indicatif et non limitatif.

Exemple 1 : Synthèse du poly(thiurame disulfure) de N,N′-diméthyl-1,6-hexanediamine

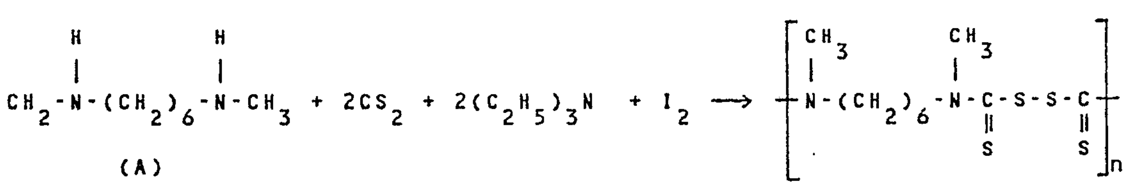
(A)

On dissout 0,025 mole de la diamine (A) dans 50 ml de $CHCl_3$ et on refroidit la solution résultante à 10 C. On y ajoute 7 ml de triéthylamine, puis 2g de $CS_2$. On agite le mélange pendant 1/2 heure. La solution devient jaune. On ajoute ensuite $I_2$ (6,45 g ; 0,05 mole) jusqu'à persistance de la couleur caractéristique. Par addition d'éthanol, un précipité jaune se forme. On le filtre sous aspiration et on le lave soigneusement avec de l'éthanol. On sèche sous vide à la température ambiante.

Analyse élémentaire pour $(C_{10}H_{18}N_2S_4)_n$

| C(%) | H(%) | N(%) | S(%) |
|---|---|---|---|
| 40,5 | 6,2 | 9,3 | 43,7 |

IR ($cm^{-1}$) : 1500; 1380; 1175; 720.

Exemple 2 : Synthèse du poly(thiurame disulfure) de pipérazine

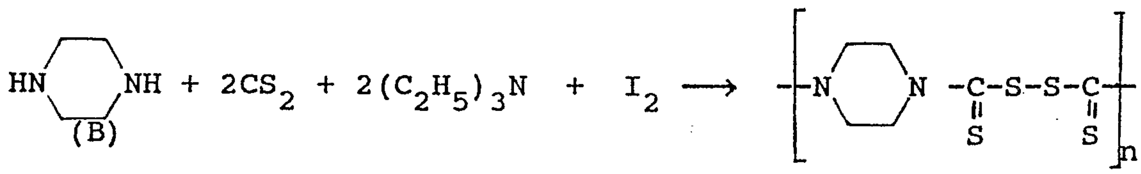

On procède comme à l'Exemple 1, en partant de la diamine (B). Dans ce cas, un précipité jaune apparaît au cours de la réaction. Il est récupéré comme décrit à l'Exemple 1.

Analyse élémentaire pour $(C_6H_8N_2S_4)_n$

| C(%) | H(%) | N(%) | S(%) |
|---|---|---|---|
| 30,4 | 3,3 | 11,7 | 54,5 |

Exemple 3 : Synthèse du poly(thiurame disulfure) de N,N'-diéthylènediamine

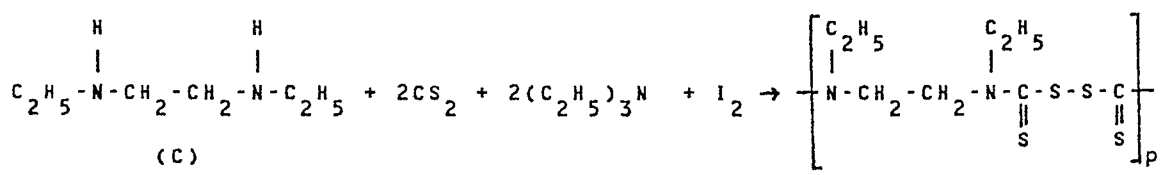

On procède comme à l'Exemple 1 en partant de la diamine (C).

Analyse élémentaire pour $(C_8H_{14}N_2S_4)_n$

| C(%) | H(%) | N(%) | S(%) |
|---|---|---|---|
| 36,2 | 5,2 | 10,7 | 48,3 |

Exemple 4 : Synthèse du poly(thiurame disulfure) de formule

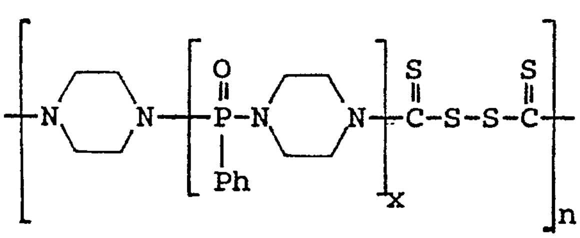

Première étape : Synthèse du phosphonamide

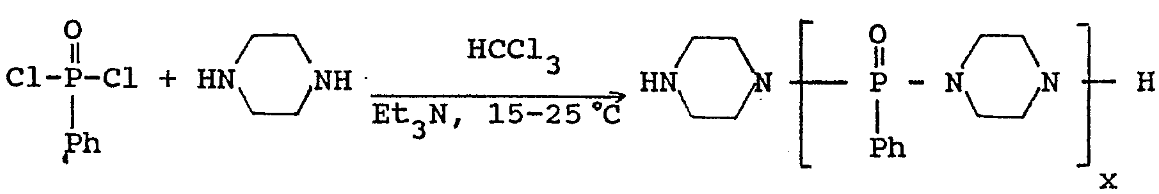

On prépare divers oligomères de masses moléculaires diffèrentes en faisant varier les rapports molaires du dichlorure de l'acide phénylphosphonique et de la pipérazine.

Dans une réaction représentative, on dissout 3,2 g (0,037 mole) de pipérazine dans 50 ml de $CHCl_3$ sec. On y ajoute 8 ml de triéthylamine sèche, puis 4 ml (5g, 0,028 mole) de dichlorure d'acide phénylphosphonique, goutte à goutte, en l'espace de 20 à 25 minutes, sous argon. La température du système s'éléve à 40 C. Le précipité blanc formé initialement disparaît lentement au cours de la réaction. Le système est agité à la température ambiante pendant 24 heures. Le chlorhydrate d'amine est éliminé par lavage avec un mélange de glace et d'eau froide, et la solution est séchée sur $MgSO_4$ anhydre. Les produits de masse moléculaire élevée sont isolés par précipitation dans l'éther de la solution dans le chloroforme. Le précipité blanc est filtré, lavé avec de l'éther, puis séché sous vide.

Deuxième étape: Synthèse du poly(thiurame disulfure) attendu

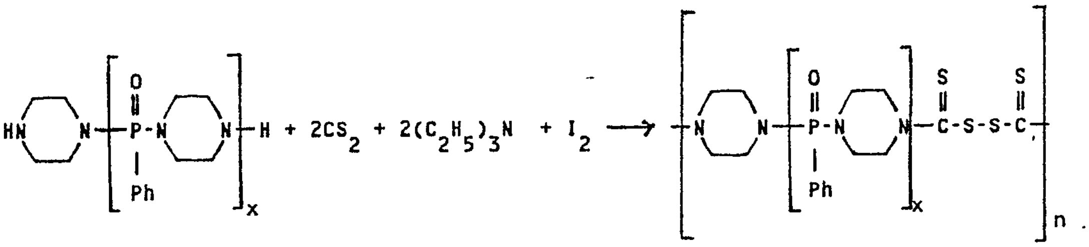

On dissout 5 g de la diamine précurseur dans 50 ml de chloroforme et on refroidit à 10 C. On ajoute 2 ml de triéthylamine, puis 1 ml de $CS_2$. A la solution jaune pâle, on ajoute une solution de $I_2$ dans $CHCl_3$ jusqu,à ce que la couleur violette persiste. On lave la solution 3 fois avec de l'eau refroidie par de la glace, on la sèche sur $MgSO_4$ et on la verse dans l'éther diéthylique pour faire précipiter une poudre fine jaune que l'on sèche sous vide à la température ambiante.

Masse moléculaire du segment diamine : 4 250

Masse moléculaire du produit : 12 500

Analyse élémentaire

| C(%) | H(%) | N(%) | O(%) | P(%) | S(%) |
|---|---|---|---|---|---|
| 55,2 | 6,0 | 13,1 | 7,3 | 14,2 | 3,9 |

Exemple 5 : Synthèse du poly(thiurame disulfure) de formule

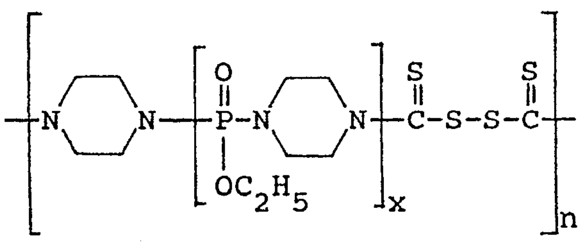

Première étape : Synthèse du phosphorylamide

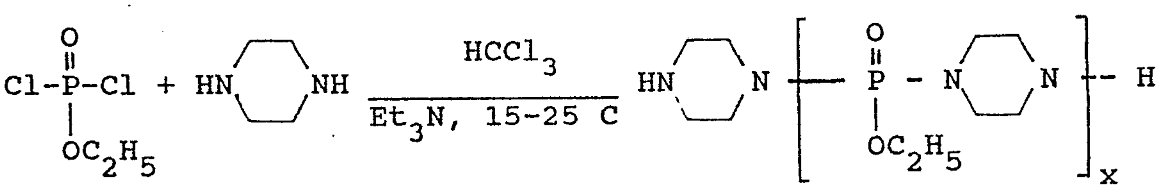

On a fait réagir 0,06 mole de pipérazine dissoute dans 50 ml de $CHCl_3$ sec contenant 14 ml de $Et_3N$, sur 0,05 mole du dichlorophosphate ci-dessus, sous argon. La température du système commence à s'élever. Aprés l'addition, on maintient le système à la température ambiante pendant toute une nuit. Le chlorhydrate de triéthylamine est éliminé par lavage avec un mélange d'eau froide et de glace. Après séchage sur $MgSO_4$ anhydre, la solution est ajoutée à de l'éther diéthylique pour faire précipiter la fraction de masse moléculaire élevée du polyamide. Le précipité blanc est filtré et séché à 40 C sous vide.

Deuxième étape : Synthèse du produit attendu.
On procède comme à la deuxième étape de l'Exemple 4 avec la diamine précurseur obtenue à la première étape.
Masse moléculaire du segment diamine : 7600
Analyse élémentaire:

| C(%) | H(%) | N(%) | O(%) | P(%) | S(%) |
|---|---|---|---|---|---|
| 40,2 | 7,4 | 15,2 | 17,2 | 17,1 | 2,9 |

Exemple 6 : Synthèse du poly(thiurame disulfure) de formule

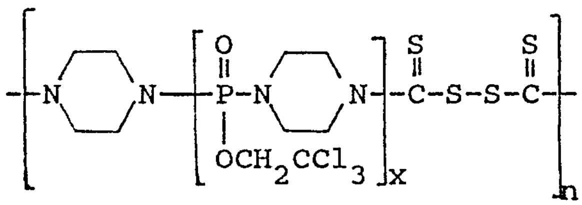

Première étape: Synthèse du phosphorylamide

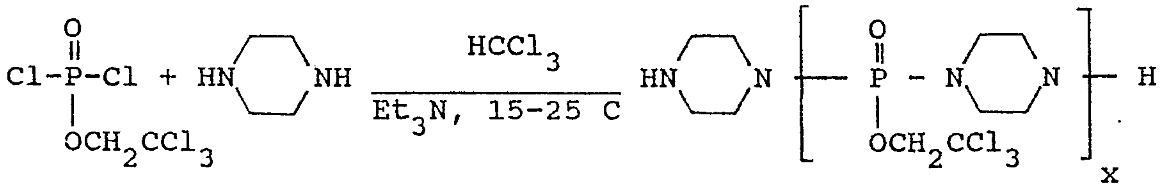


On procède comme à la première étape de l'Exemple 5, en utilisant le dichlorophosphate correspondant.

Deuxième étape : Synthèse du produit attendu
On procède comme à la deuxième étape de l'Exemple 4 avec la diamine précurseur obtenue à la première étape.
Masse moléculaire du segment diamine : 6000
Analyse élémentaire:

| C(%) | H(%) | N(%) | O(%) | P(%) | S(%) | Cl(%) |
|---|---|---|---|---|---|---|
| 24,9 | 3,5 | 9,7 | 10,1 | 10,3 | 3,7 | 36,2 |

Exemple 7 : Synthèse du poly(thiurame disulfure) de formule

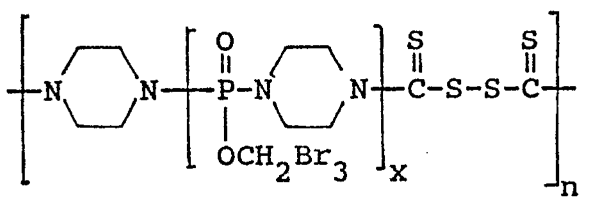

Première étape : Synthèse du phosphorylamide

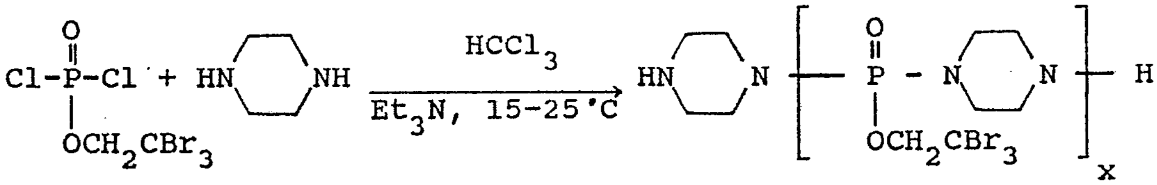


On procède comme à la première étape de l'Exemple 5, en utilisant le dichlorophosphate correspondant.

Deuxième étape : Synthèse du produit attendu

On procède comme à la deuxième étape de l'Exemple 4, avec la diamine précurseur obtenue à la première étape.

Masse moléculaire du segment diamine : 12250

Analyse élémentaire:

| C(%) | H(%) | N(%) | O(%) | P(%) | S(%) | Br(%) |
|---|---|---|---|---|---|---|
| 17,8 | 2,5 | 6,6 | 7,0 | 6,7 | 3,0 | 55,8 |

Exemple 8 : Synthèse du poly(thiurame disulfure) de formule

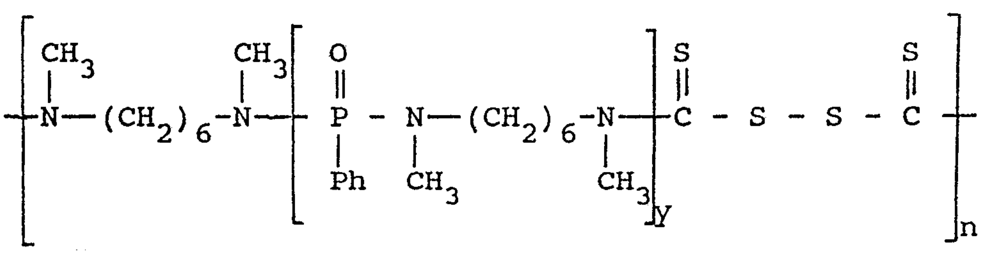

Première étape : Synthèse du phosphonamide

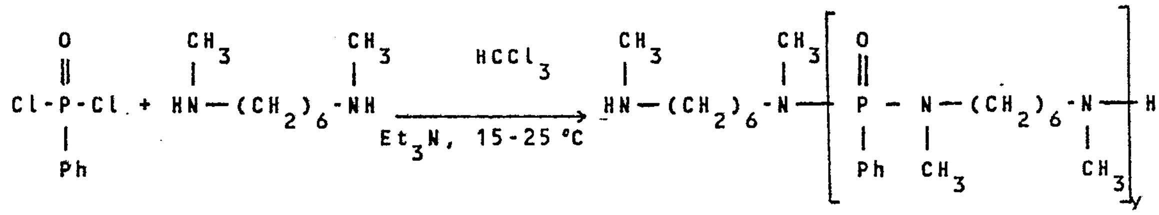


On ajoute lentement 0,04 mole de dichlorure d'acide phénylphosphonique fraîchement distillé à 0,1 mole de N,N'-diméthyl-1,6 hexanediamine dissoute dans 50 ml de $CHCl_3$. Un précipité blanc se forme immédiatement. On agite le mélange pendant 24 heures. On élimine le précipité par filtration et on lave le filtrat avec un mélange d'eau froide et de glace sèche. Aprés séchage sur $MgSO_4$, on concentre la solution par évaporation , puis on

la verse dans un grand excès d'éther pour isoler le polyphosphonamide. Un produit hygroscopique résineux brun est obtenu après séchage sous vide.

Deuxième étape : Sythése du produit attendu

On procède comme à la deuxième étape de l'Exemple 4, avec la diamine précurseur obtenue à la première étape.

Masse moléculaire du segment diamine : 2700

Analyse élémentaire:

| C(%) | H(%) | N(%) | O(%) | P(%) | S(%) |
|---|---|---|---|---|---|
| 61,0 | 8,3 | 10,3 | 5,4 | 10,5 | 4,7 |

Exemple 9 : Synthèse du poly(thiurame disulfure) de formule

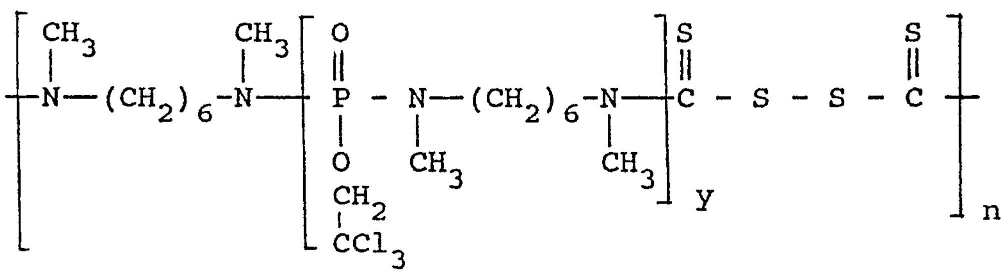

Première étape : Synthèse du phosphorylamide

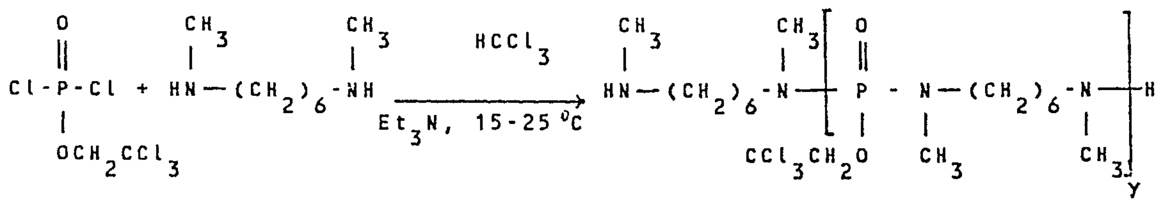


Dans un ballon tricol de 250 ml, sous atmosphère d'argon, on place 0,06 mole de N,N'-diméthyl-hexane-diamine-1,6 et 5 ml de triéthylamine sèche. On refroidit le système à 10 C et on ajoute goutte à goutte 0,02 mole du dichlorure respectif en l'espace de 15 minutes. On laisse le mélange se réchauffer jusqu'à la température ambiante et on maintient l'agitation pendant 20 heures. On filtre le chlorhydrate d'hexanediamine précipite, on lave soigneusement le résidu avec un mélange de glace et d'eau froide. On le sèche sur $MgSO_4$ et on fait évaporer le solvant. On obtient une masse résineuse. Rendement : 30%.

Deuxième étape : Synthèse du produit attendu

On procède comme à la deuxième étape de l'Exemple 1, avec la diamine précurseur obtenue à la première étape. A la place de la poudre fine jaune, on obtient une masse résineuse brune que l'on sèche.

Masse moléculaire du segment diamine : 2200

Analyse élémentaire:

| C(%) | H(%) | N(%) | O(%) | P(%) | S(%) | Cl(%) |
|---|---|---|---|---|---|---|
| 35,0 | 6,5 | 8,4 | 8,0 | 8,0 | 7,3 | 27,1 |

Exemple 10 : Synthèse du poly(thiurame disulfure) de formule

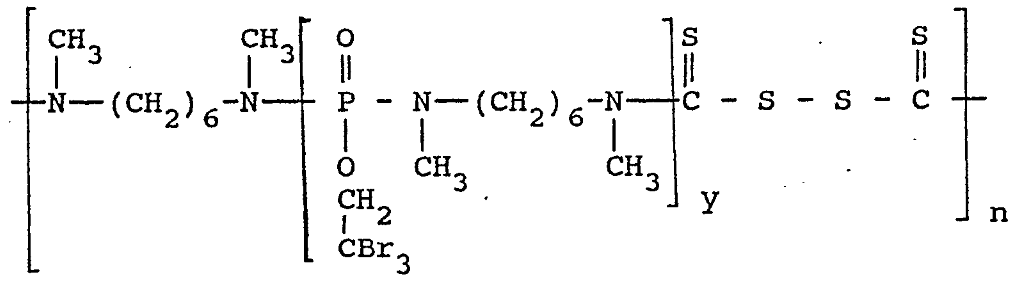

Première étape :

On procède comme à la première étape de l'Exemple 4, en utilisant le dichlorophosphate correspondant.

Deuxième étape :

On procède comme à la deuxième étape de l'Exemple 4 en utilisant la diamine précurseur obtenue à la première étape. On obtient une masse résineuse brune que l'on séche.

Masse moléculaire du segment diamine : 3000

Analyse élémentaire:

| C(%) | H(%) | N(%) | O(%) | P(%) | S(%) | Br(%) |
|---|---|---|---|---|---|---|
| 26,2 | 4,5 | 6,0 | 6,0 | 5,5 | 5,4 | 45,6 |

Exemple 11 : Synthèse du poly[N,N'-diéthyl N,N'-bis(2,2'-phényl phosphono éthyl)thiurame disulfure] :

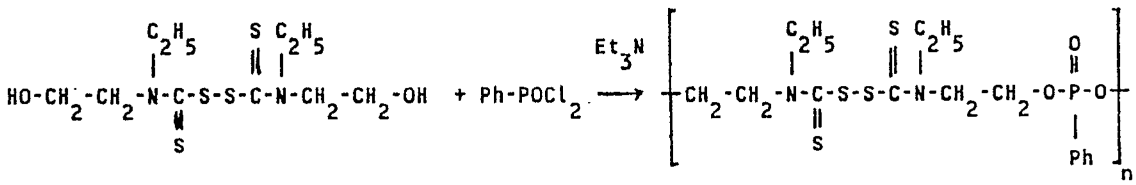


A 8,2 g (0,025 mole) de N,N'-diéthyl N,N'-bis-(2-hydroxyéthyl)thiurame disulfure, dissous dans 25 ml de $CHCl_3$, on ajoute 7 ml (0,05 mole) de triéthylamine et 4,92 g (0,025 mole) de dichlorure d'acide phényl phosphorique. Le système est agité à 0 C pendant 24 heures. La solution visqueuse est lavée deux fois avec un mélange d'eau froide et de glace, séchée sur $MgSO_4$ anhydre et le polymère est précipité par l'éther. Un polymère collant brun est obtenu lequels est séché sous vide à la température ambiante. Rendement : 4 g (35%)

Analyse élémentaire:

| C(%) | H(%) | N(%) | O(%) | P(%) | S(%) |
|---|---|---|---|---|---|
| 42,3 | 5,3 | 5,6 | 11,9 | 6,4 | 27,2 |

Exemples 12 à 21 : Polymérisation radicalaire d'un monomère vinylique avec le composé de l'Exemple 4 comme polyiniferter.

Mode opératoire général

Les polymérisations sont effectuées dans des tubes de verre, sous vide, scellés, de 110 x 140 mm. Etant donné que le polyiniferter est insoluble dans le monomère, le méthoxy-2 éthanol est utilisé comme milieu d'homogénéisation. 5 ml du solvant contenant la quantité requise du polyiniferter sont introduits dans un tube de verre contenant 10 ml du monomère. Le contenu est désaéré par au moins trois cycles de congélation, mise sous vide et dégel, et le tube est scellé à une pression de 13,3 Pa (0,1 mm Hg). Le tube est immédiatement enveloppé dans du papier aluminium et la polymérisation est conduite dans un bain d'huile à la température requise dans le laps de temps désiré. Après la polymérisation, les tubes sont retirés, réfrigérés dans un mélange glace séche - isopropanol et le polymère, dilué avec $HCCl_3$, est précipité goutte à goutte dans le méthanol. Le précipité est recueilli dans un creuset de verre fritté, séché à 45 C pendant toute une nuit et pesé.

On a effectué diverses polymérisations de méthacrylate de méthyle (Exemples 12 à 16) ou de styréne (Exemples 17 à 21) en faisant varier la concentration en polyiniferter, celui-ci étant le composé de l'Exemple 4, la temperature et le temps de polymérisation. Les résultats sont rapportés dans le Tableau I ci-après, de même que les indices limites d'oxygène (IOL) selon la norme ASTM 2863-70 des polymères de ces exemples (on mesure le pourcentage d'oxygène/oxygène + azote qui est nécessaire pour que la combustion s'entretienne pendant 3 minutes).

Tableau I

| Polymère de l'Exemple | Poids de polyiniferter par litre de monomère (g) | Température de polymérisation (°C) | % de conversion | Poids de phosphonamide dans le copolymère (g) | [η] en dl/g dans $HCCl_3$ à 25°C | IOL |
|---|---|---|---|---|---|---|
| 12 | 4 | 85 | 9 | 9,2 | 0,77 | 26 |
| 13 | 2 | 95 | 5 | 9,2 | 1 | 26 |
| 14 | 8 | 85 | 12 | 15 | 0,6 | 32 |
| 15 | 8 | 85 | 25 | 12 | 0,65 | 28 |
| 16 | 4 | 85 | 15 | 7 | 0,9 | 26 |
| 17 | 10 | 78 | 5 | 4,4 | 1,0 | 27 |
| 18 | 20 | 78 | 5 | 9 | 0,65 | 30 |
| 19 | 40 | 78 | 6 | 13,2 | 0,5 | 36 |
| 20 | 80 | 78 | 4 | 21 | 0,4 | 38 |
| 21 | 10 | 78 | 35 | 19 | 0,4 | 37 |

**Revendications**

1 - Composé chimique représenté par la formule (I) :

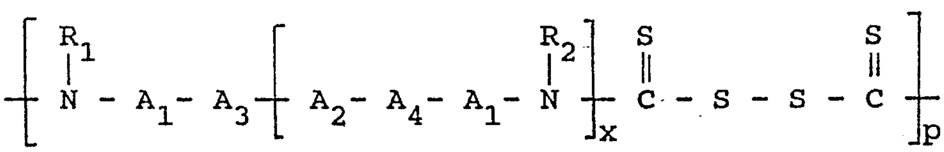

(I)

dans laquelle :- $R_1$ et $R_2$ représentent chacun, indépendamment l'un de l'autre : . un groupe alkyle en $C_1$ -$C_{12}$, linéaire ou ramifié, éventuellement interrompu par au moins un hétéroatome et/ou par au moins un reste

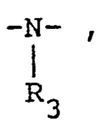

. un groupe cycloalkyle en $C_3$-$C_{12}$ ;
. un groupe aryle ;
. un groupe Y-$R_4$ , dans lequel :
- Y représente une simple liaison; un hétérotome; un groupe alkyle en $C_1$ -$C_{12}$. linéaire ou ramifié, éventuellement interrompu par un hétéroatome et/ou par au moins un reste

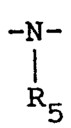

un groupe cycloalkyle en $C_3$-$C_{12}$ ; un groupe aryle ; et
- $R_4$ représente un groupement phosphoré, hydroxyle, carboxyle, ester, -Si($R_6$)$_2$H ;
- $R_3$ et $R_5$ étant choisis indépendamment l'un de l'autre parmi les groupes entrant dans la définition de $R_1$ et $R_2$ à l'exclusion du groupe Y-$R_4$ ;

- chacun des groupes $R_1$ , $R_2$, $R_3$ et $R_5$ pouvant porter au moins un groupement fonctionnel choisi parmi les groupements hydroxyle, carboxyle, ester, $-Si(R_7)_2H$, et les groupements phosphorés ;
- $R_6$ et $R_7$ représentant chacun, indépendamment l'un de l'autre, un groupe alkyle, cycloalkyle, alkoxy, aryle, aryloxy ;
- à la condition que, lorsque x est diffèrent de 0, au moins l'un parmi les radicaux $R_1$ et $R_2$ soit constitué par ou soit porteur d'au moins un groupement fonctionnel tel que défini ci-dessus, ce groupement pouvant être porté par un radical $R_3$ ou $R_5$ ;
- les groupes $R_1$ à $R_3$ et $R_5$ à $R_7$ pouvant porter des substituants ; - $A_1$ représente :
. un reste $-(CR_8R_9)_n-$, avec $R_8$ et $R_9$ représentant chacun, indépendamment l'un de l'autre, hydrogène ou un reste alkyle en $C_1$-$C_{12}$ , ledit reste alkyle pouvant être interrompu par au moins un hétéroatome et/ou au moins un reste

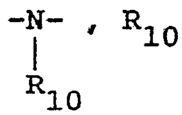

étant choisi parmi les groupes entrant dans la définition de $R_1$ et $R_2$ ; et n représentant un nombre entier de 1 à 6 ; ou bien
. le reste d'un cycle aliphatique pouvant renfermer au moins un hétéroatome ; ou
. lorsque $A_3$ vaut

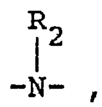

$R_1$ et $R_2$ du groupe

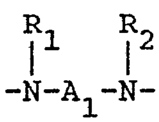

peuvent être reunis pour constituer un hétérocycle azoté ;
- $A_2$ représente

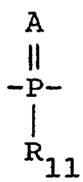
ou
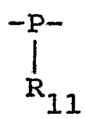
,

avec $R_{11}$ représentant un groupe alkyle en $C_1$-$C_{12}$, alkoxy en $C_1$-$C_{12}$ ou cycloalkyle en $C_3$-$C_{12}$, ou aryle, ces groupes pouvant porter des substituants ; et A représentant un atome d'oxygène ou un atome de soufre ;
- $A_3$ et $A_4$ répondent aux conditions suivantes :
. ou bien tous les deux sont égaux à -O- ;
. ou bien $A_3$ et $A_4$ représentent respectivement les $R_2$ $R_1$ mêmes

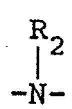
et
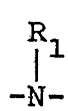

que ceux apparaissant dans l'écriture ci-dessus de la formule (I) ;
- $\overline{x}$ va de 0 à 100 environ, $\overline{x}$ étant cependant au minimum égal à 1 lorsque $A_3$ et $A_4$ représentent -O- ; et
- $\overline{p}$ va de 2 à 100 environ.

2 - Composé chimique selon la revendication 1, caractérisé par le fait qu'il répond à la formule (Ia) :

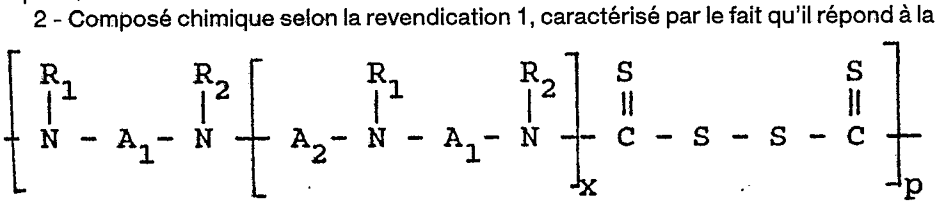
(Ia)

dans laquelle :

- $R_1$, $R_2$, $A_1$, $A_2$, $\bar{x}$ et $\bar{p}$ sont tels que définis à la revendication 1.

3 - Composé chimique selon la revendication 2, caractérisé par le fait que :

- $R_1$ et $R_2$ représentent chacun, indépendamment l'un de l'autre, un groupe alkyle en $C_1$-$C_{12}$, linéaire ou ramifié, éventuellement interrompu par oxygène ou

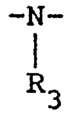

un groupe cycloalkyle en $C_5$-$C_7$ ; un groupe aryle ; $R_3$ étant choisi parmi les groupes entrant dans la définition de $R_1$ et $R_2$ ; les groupes $R_1$ à $R_3$ pouvant être substitués par au moins un atome d'halogène ;

- $A_1$ représentent un reste $-(CH_2)_n-$, avec n valant de 1 à 6, ou un reste

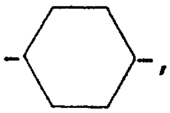, 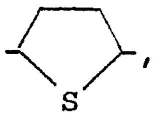, 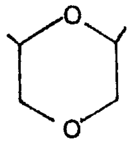 ou 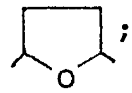 ;

ou - le groupement

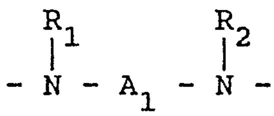 représente 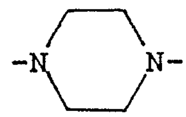 ;

- $A_2$ représente

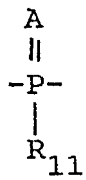 ,

$R_{11}$ et A étant tels que définis à la revendication 1 ; et

- $\bar{x}$ et $\bar{p}$ étant tels que définis à la revendication 1.

4 - Composé chimique selon la revendication 1, caractérisé par le fait qu'il répond à la formule (Ib) :

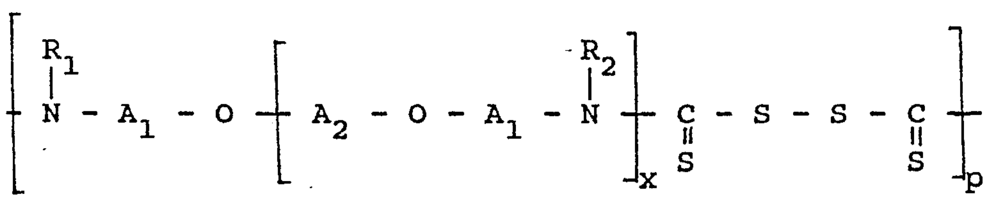 (Ib)

dans laquelle :

- $R_1$ et $R_2$ représentent chacun, indépendamment l'un de l'autre, un groupe alkyle en $C_1$-$C_{12}$, lineaire ou ramifié, éventuellement interrompu par oxygène ou

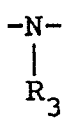

un groupe cycloalkyle en $C_5$-$C_7$ ; un groupe aryle ; $R_3$ étant choisi parmi les groupes entrant dans la définition de $R_1$ et $R_2$ ; les groupes $R_1$ à $R_3$ pouvant être substitués par au moins un atome d'halogène ;

- $A_1$ représentent un reste $-(CH_2)_n-$, avec n valant de 1 à 6, ou un reste

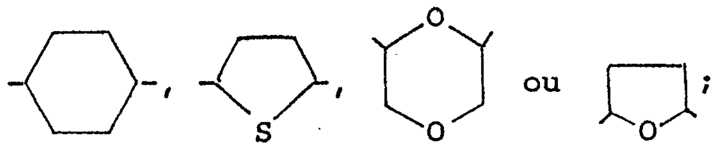

et
- $A_2$ représente

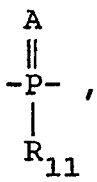

$R_{11}$ et A étant tels que définis à la revendication 1 ; et
-$\bar{x}$ et $\bar{p}$ étant tels que définis à la revendication 1.

5 - Procédé de fabrication d'un composé chimique tel que défini à l'une des revendications 1 à 3, avec x = 0 et

et $A_3$ = 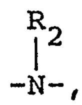

répondant ainsi à la formule (Ic) :

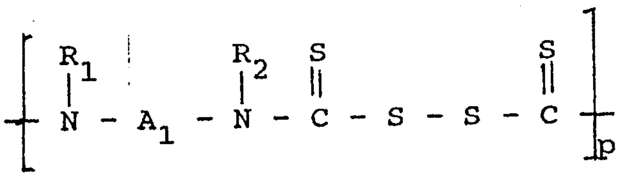 (Ic),

caractérisé par le fait qu'on fait réagir un composé de formule (II) :

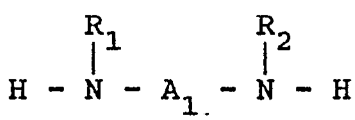 (II)

avec $CS_2$, en présence d'un agent oxydant et d'une amine tertiaire.

6 - Procédé de fabrication d'un composé chimique tel que défini à l'une des revendications 2 et 3, $\bar{x}$ étant différent de 0, caractérisé par le fait que
- dans une première étape, on fait réagir un composé de formule (II), en excés,

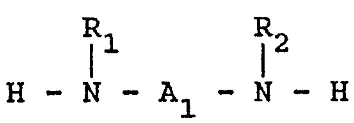 (II)

avec un composé de formule (III) :
X - $A_2$ - X (III)
X étant un groupement partant, ce qui conduit au composé intermédiaire de formule (IV) :

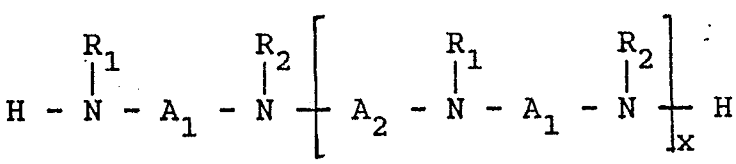 (IV)

et,
- dans une deuxième étape, on fait réagir le composé de formule (IV) avec $CS_2$, en présence d'un agent oxydant et d'une amine tertiaire.

7 - A titre d'intermédiaires de synthèse des composés de la formule (I), tels que définis à l'une des revendications 2 et 3, le composé de formule (IV) tel que défini à la revendication 6.

8 - Procédé de fabrication du composé de formule (Ib), telle que définie à la revendication 4,

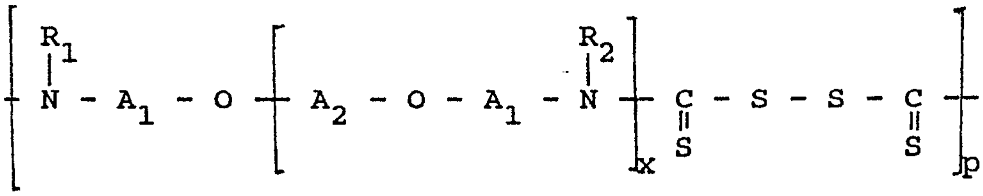

(Ib)

caractérisé par le fait qu'on fait réagir un composé de formule (V) :

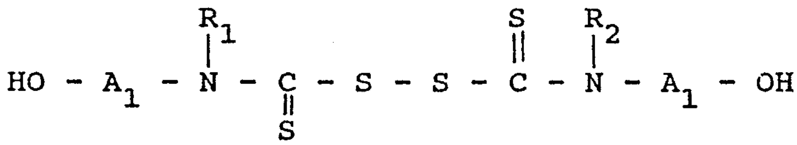

(V)

sur un composé de formule (III) :

$X - A_2 - X$ (III) X étant un groupement partant.

9 - Utilisation du composé tel que défini à l'une des revendications 1 à 4, comme agent ayant la triple fonction d'initiateur, d'agent de transfert de chaîne et d'agent de terminaison dans la polymérisation radicalaire de monomères vinyliques.

10 - Polymères vinyliques multifonctionnels obtenus par polymérisation radicalaire d'au moins un monomère vinylique en présence d'au moins un composé tel que défini à l'une des revendications 1 à 4.

11 - Utilisation des composés tels que définis à l'une des revendications 1 à 4 et des polymères vinyliques multifonctionnels tels que définis à la revendication 10, à la condition qu'ils portent au moins un groupement phosphoré, dans la fabrication de matières ignifugées, comme polymères ignifugeants, à titre d'additifs ou de composants d'ignifugation.

Office européen des brevets

# RAPPORT DE RECHERCHE EUROPEENNE

Numero de la demande

EP 89 40 1079

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 091 317 (BASF)<br>--- | | C 08 G 75/00<br>C 07 C 155/10 |
| A | CHEMICAL ABSTRACTS, vol. 83, no. 6, 11 août 1975, page 3, résumé mp. 43805x, Columbus, Ohio, US; S.I. ORLOV et al.: "Production of poly[ethylenebis(thiuram disulfide)]" & KHIM. PROM.-ST. (MOSCOW) 1975, (3), 188-9<br>----- | | |
| | | | **DOMAINES TECHNIQUES RECHERCHES (Int. Cl.4)** |
| | | | C 08 G<br>C 07 C |

Le présent rapport a été établi pour toutes les revendications

| Lieu de la recherche | Date d'achèvement de la recherche | Examinateur |
|---|---|---|
| LA HAYE | 04-09-1989 | STIENON P.M.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)